# EUROPEAN PATENT SPECIFICATION

(11) **EP 1 745 698 B1**
(45) Date of publication and mention of the grant of the patent: **06.01.2010**
(21) Application number: 04425629.5
(22) Date of filing: 13.08.2004
(51) Int. Cl.: A01M 7/00

(54) **Improved (low-volume TM) pneumatic atomiser and anti-drip device thereof**
Pneumatischer Zerstäuber sowie eine Tropfschutzvorrichtung
Atomiseur de liquides et un dispositif anti-gouttes

(43) Date of publication of application: 24.01.2007
(73) Proprietor: C.I.M.A. S.P.A., 27040 Montu Beccaria (IT)
(72) Inventor: Smeraldi, Paolo, 27040 Montescano, Pavia (IT)
(74) Representative: Faggioni, Marco

(56) References cited:
- WO-A-87/01909
- AT-B- 371 665
- DE-A- 1 802 735
- FR-A- 1 232 915
- FR-A- 1 259 284
- FR-A- 1 321 568
- FR-A- 2 082 085
- US-A- 4 396 157

## Description

The present invention relates to an improved pneumatic atomiser (of the type also marketed under the trademark LOW-VOLUME™) and to an anti-drip device thereof. In particular, the invention relates to a pneumatic atomiser employing diffusers (such as the one manufactured by the Applicant under the trademark BASSO VOLUME™ for example) equipped with a suitable device capable of preventing treatment liquids from leaking at the end of the spraying session.

In agriculture, "low-volume" pneumatic atomisers are known, wherein the system for the atomisation of the liquid (generally an agrochemical product, for example a phytosanitary product) to be sprayed on the crops employs an airblast, generated by a suitable blower, which is blown into diffusers of distribution devices (headpieces) into which the liquid is drawn and finely atomised due to the Venturi effect.

By means of the headpieces the airflow, enriched with fine droplets, is oriented towards and adjusted to the type of crop in an extremely efficient manner. Moreover, the entire distribution system operates at low pressure, which greatly reduces problems concerning maintenance and duration of the materials.

The above features make diffuser-based atomisers a most welcome product which is greatly appreciated on the market of agricultural machines.

As is understandable, one of the most delicate points of the whole system is indeed the distribution device assembly. Said devices generally have a plurality of air ducts or diffusers, at least partly shaped (for example having a bottleneck or pipe obstruction spindle within the duct) to cause a Venturi effect. In correspondence of the Venturi-effect area of each duct, the liquid agrochemical product is drawn through a respective small feeding tube, at very low or zero pressure, also thanks to the depression (in the order of 1-2 mt. of water column for Venturi double-cone delivery devices or of 300-350 cm of water column for fan-shaped delivery devices) which originates in that duct portion. Therein occurs the atomisation into tiny droplets, which are later carried by the airblast onto the crop to be treated.

The various small feeding tubes, in turn, branch from one or more liquid distribution manifold, the quantity of which liquid may be adjusted at the entrance site by means of a gauging device, such as a single-hole or multiple-hole plug nut, or a multiple-hole disc, or still an adjustment valve (stopcock), depending on requirements or construction techniques.

It is further known that in such atomisers, whenever operation of the machine is interrupted, airflow interruption in the distributors also results in the incapability of drawing the liquid mixture, which consequently tends to stagnate in its respective distribution group. Although at the end of the operation it can be envisaged to shut the stopcock which lets in the liquid mixture, part of said mixture inevitably remains in the pipes and tubes downstream of the stopcock. Since the headpieces are of a rather complex shape and arranged with different attitudes, it is obvious that, in the absence of suitable devices, at the end of the operation part of the liquid will come out of the distribution group by gravity, dripping.

As can be well understood, the fact that a certain quantity of liquid to be sprayed on the crops drips and is discharged in a limited area of soil, causes various environmental concerns, and consequently economical ones too, such as splashing for example, which may reduce concentration of soil salts.

Furthermore, it is well known that percolation into a limited area of soil of liquids containing relatively high concentrations of agrochemical products easily modifies water composition of the water-bearing layer. Such variations may have a varying degree of harmfulness, according to concentrations and type of the chemical agents, and hence determine serious environmental damage and/or costs.

It must also be borne in mind that over recent time new legislation for environmental protection has become ever more restrictive and has required new-generation atomisers to be free from such drip problems.

An attempt to reduce such phenomenon has already been carried out over known-art column atomisers, by providing a check valve in the main pipe between the upper and the lower spraying assembly. However, such a solution, despite lowering the pressure of the liquid upon the lower spraying assembly, does not eliminate the problem of dripping from individual distributors.

It has also been attempted to prevent the above-mentioned undesired phenomena and to comply with current legislation by stopping - simultaneously or nearly so, upon blower stoppage - liquid inflow into the distribution manifold, by mounting a pre-loaded valve, for example a diaphragm one or a ball valve equipped with a suitable spring, which allows liquid through-flow only when the delivery liquid is at a suitable pressure. This approach, too, has provided totally unsatisfactory results. As a matter of fact, the presence of the above-described automatic stopping device (which allows liquid through-flow only when a certain pressure is provided, i.e. during operation) does not prevent the liquid from stagnating in the downstream pipe portion, in particular in the small feeding tubes.

Since the small feeding tubes, and their respective outlet ports in the air diffusers, are arranged at different heights (because the diffusers are mutually vertically offset or even two or more distribution assemblies are provided at different heights on the machine) the liquid tends to flow - by the principle of communicating vessels - from the uppermost tubes towards the lowermost ones (through the common distribution manifold) until it comes out of the outlet ports of said lowermost pipes, dripping into its respective air duct and then onto the ground, with the above-mentioned results.

Unfortunately, since downstream of the gauging device liquid pressure is extremely low (due to load losses and to depression, pressure next to zero or negative pressure is detected), it is inconceivable to arrange in this plant portion a conventional preloaded valve, capable of allowing liquid through-flow in the spraying direction (that is, from the manifold towards the diffuser) only during operation under pressure.

In view of such difficulties, the solution has also been explored of providing a plurality of electromagnetic valves, driven according to blower operation, i.e. programmed to allow liquid through-flow whenever the blower is in operation and to shut completely liquid delivery, from the feeding pipes to the respective spraying devices, as soon as blower operation is discontinued. As can be guessed, however, this solution is extremely costly and complicated.

FR 1259284 discloses a low volume atomizer having the features of the preamble of the attached claim 1. DE 1802735 discloses a pressure atomizer where a plurality of nozzles are fed with a treatment liquid under pressure through a pump; check-valves are provided next to the nozzles, which check-valves are able to open when pressure of the liquid is above a selected minimum.

It is hence an object of the present invention to solve the above-mentioned drawback, by resorting to a simple, automatic and inexpensive arrangement.

Such object is achieved through an atomiser for spraying in agriculture and relative anti-drip device as described in their essential features in the attached claims.

In particular, according to the invention, an atomiser employing diffusers is provided for agricultural use, of the type comprising at least a tank for a treatment liquid, a blower to define an airblast in delivery ducts of delivery assemblies, and a system feeding the liquid to the delivery ducts comprising at least one common manifold with multiple branches, from which a series of small connection pipes departs to respective delivery ducts, and wherein between the common manifold and each of said pipes, at the bottom of said pipes, there is provided at least one check valve preventing reflux of the treatment liquid from the pipes towards the common manifold.

According to a further aspect of the present invention, the distribution manifold is positioned so that the check valves are at a lower level than the outlet port of the lowermost pipe of each delivery assembly.

Preferably, said check valves are of the one-way ball type, operating by simple gravity, or one-way conical valves or needle valves, shovel valves, leaf valves, etc.

According to a further aspect of the invention, an anti-drip device is provided for an atomiser for agricultural use, wherein a check valve is provided across each of the small feeding pipes carrying the treatment liquid towards at least the upper delivery tubes of delivery assemblies provided with a common feeding manifold, said check valve being arranged in the proximity of said common manifold.

According to still another aspect of the invention, a headpiece for an agricultural atomiser is provided, of the type comprising at least one delivery assembly comprising a plurality of diffusers, arranged at different heights, to which small feeding pipes carrying the treatment liquid lead, said pipes departing from a common manifold, characterised in that it further comprises, between the common manifold and at least the diffusers arranged at a greater height, check valves across said pipes and which are capable of preventing the natural reflux of said treatment liquid by gravity.

Other inventive aspects of the device are described in the subsidiary claims.

Further features and advantages of the device according to the invention will in any case be more evident from the following detailed description of a preferred embodiment of the same, given by way of example and illustrated in the accompanying drawings, wherein:
figs. 1 to 3 are partial perspective views of three embodiments of low-volume atomisers according to the invention;
fig. 4 is an elevation front view of an exemplary distribution/delivery assembly provided with an anti-drip device according to the invention;
fig. 5 is an enlarged perspective view of a detail of the delivery assembly of fig. 4;
figs. 6A and 6B are a longitudinal-section view and a perspective view, respectively, of a first embodiment of the anti-drip device according to the invention;
figs. 7A-7D are partial section views of other embodiments of the device of fig. 6;
fig. 8 is a perspective view of an exemplary delivery device for an atomiser according to the invention;
fig. 8A is an enlarged view of the detail enclosed in circle A of fig. 8;
fig. 9 is a perspective view of another exemplary delivery device for an atomiser according to the invention;
fig. 10 is a perspective view of still another exemplary delivery device for an atomiser according to the invention;
fig. 10A is an enlarged view of the detail enclosed in circle B of fig. 10; and
figs. 11 and 12 are perspective and elevation front views, respectively, of two other embodiments of delivery devices onto which the anti-drip device according to the invention is applied.

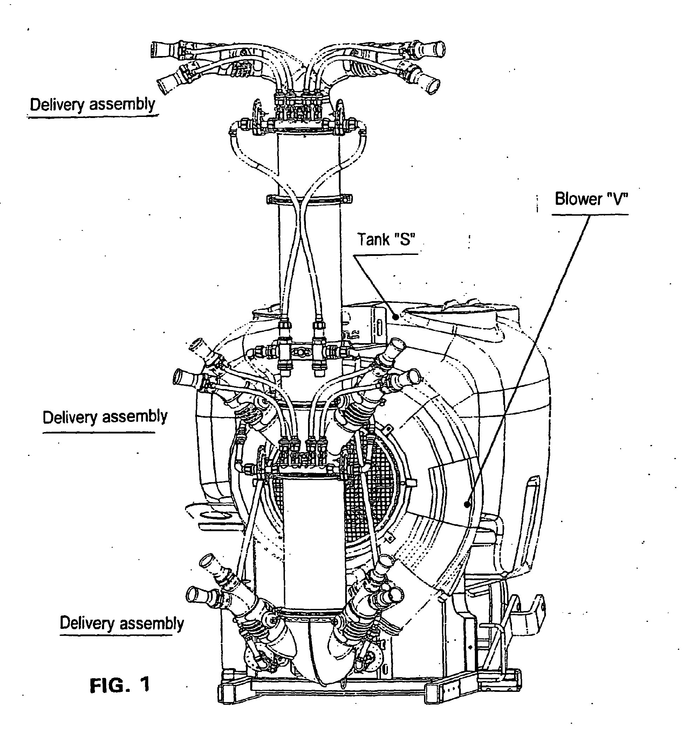

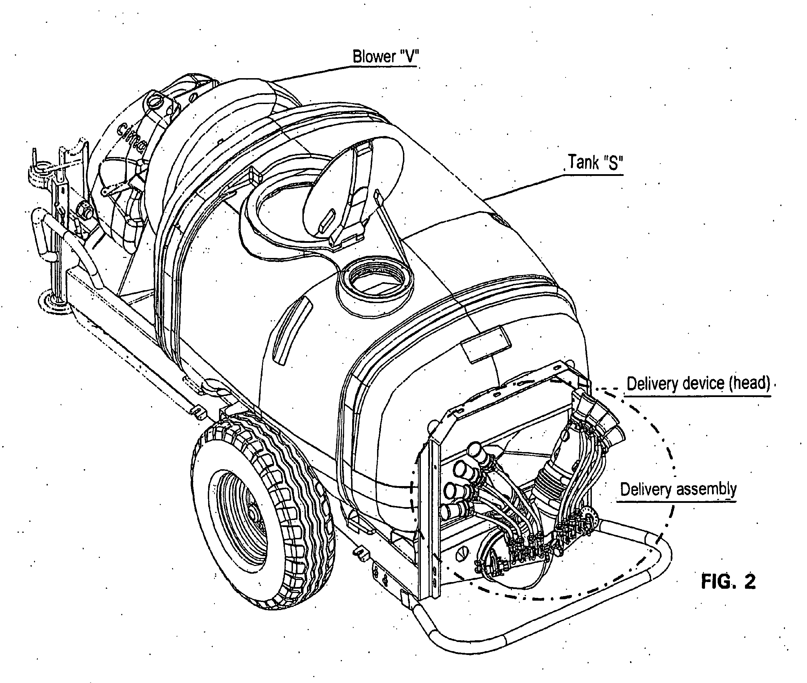

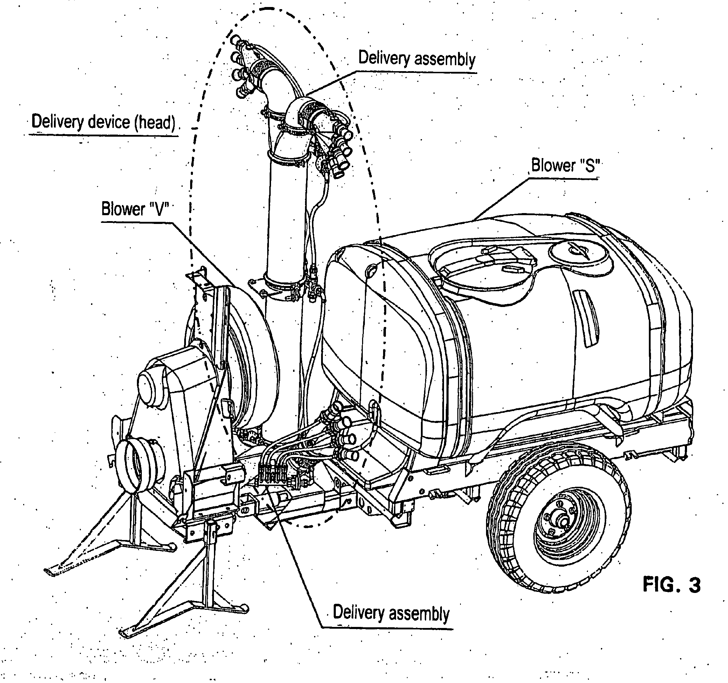

Figs. 1 to 3 show three different types of atomisers whereto the inventive concepts introduced with the present invention are applicable. In general, a trailer-mountable or carried atomiser, as shown in these drawings, consists of a support frame, possibly equipped with wheels, onto which are mounted a tank S - for the storage of the liquid mixture to be sprayed - a distribution/delivery device, consisting of one or more delivery assemblies, variously arranged according to requirements and applications, and a blower V, capable of pushing an airflow into the delivery assembly.

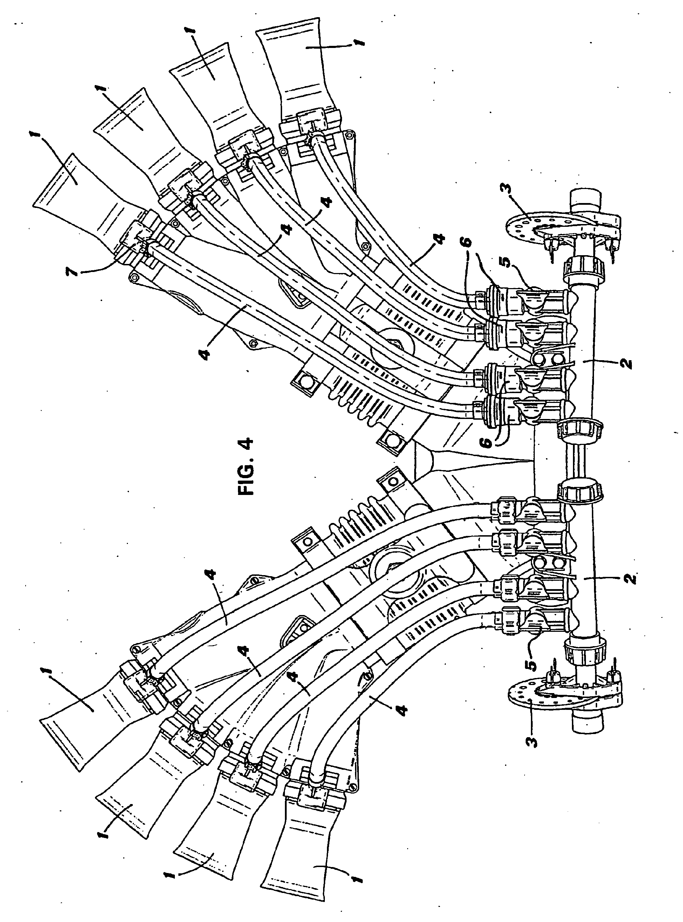

Fig. 4 shows an exemplary arrangement of a delivery assembly for an atomiser.

Each of a pair of symmetrical delivery arrangements comprises four distributors 1 with a Venturi diffuser, arranged fan-like and fed with an airflow, originating from blower V, through a suitable Y-shaped link.

Each of the delivery assemblies is associated with a common distribution manifold 2, provided with an adjustable disc device 3 gauging the flow rate. From each distribution manifold 2 depart four pipes 4 to feed the liquid to the individual diffuser distributors 1. Each pipe 4 ends with an outlet port in its respective diffuser 1, in the proximity of a bottleneck of the duct (clearly visible in the drawings) capable of creating the desired Venturi effect: in this way, when an airflow is pushed at a certain speed through the diffuser, a depression originates which tends to take in the liquid from pipe 4 into the airflow itself, without the need to pressurise the liquid mixture.

Between each pipe 4 and the branches of manifold 2, at the bottom of each of the pipes, a shutter 5 is preferably provided for the adjustment of the flow of the liquid to be sprayed (possibly to shut off some diffusers during the treatment of specific crops).

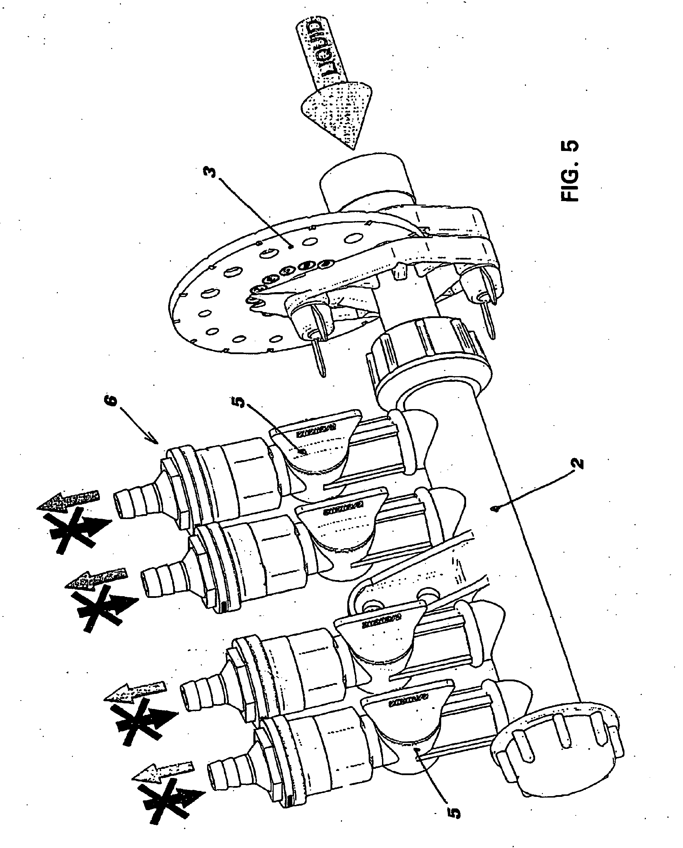

Moreover, according to the invention, between the outlet port of pipe 4 and its respective branch from manifold 2 - preferably above shutter 5 (fig. 5) - a check valve 6 is provided. Said valve 6 allows free one-way flow of the liquid mixture in the direction shown by arrows F in fig. 5, i.e. from the manifold towards the outlet port of pipe 4, but prevents reflux in the opposite direction.

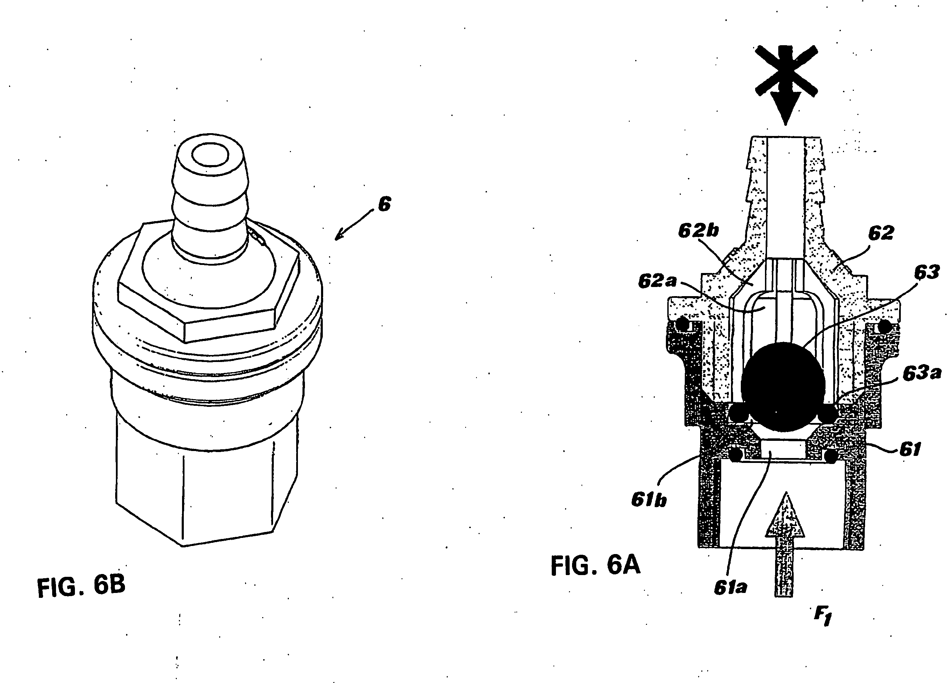

According to a preferred embodiment (figs. 6A and 6B), check valve 6 consists of a substantially cylindrical housing body 61, which may be fitted from below, for example by screw/nut-thread engagement, to the outlet of the shutter or of the branch of manifold 2, and a nozzle lid 62 having one end fitted to pipe 4.

The housing body 61 has a through-hole 61a above which there is arranged a site 61b housing a ball 63, between which a gasket 63a is provided, for example an O-ring made of elastomeric material.

The nozzle-shaped lid 62 correspondingly defines a dome chamber 62a equipped with a blow-by cage 62b (integrally moulded or added separately) capable of limiting ball movement and of preventing said ball from rising completely, thereby obstructing the outlet of nozzle 62.

Ball 63 is kept tightly in abutment against gasket 63a of its seat 61b by simple gravity and is lifted by the flow of the liquid which moves upwards in the direction of arrow F1, flowing from manifold 2 to the small pipe 4 during delivery assembly operation. Instead, the flow in the opposite direction is not permitted, since the ball is pushed sealed against gasket 63a by gravity and by the weight of the above-standing column of liquid, preventing the downward outflow thereof.

The Applicant was able to verify that - in view of the existing low pressures - the weight density of the ball is decisive for the purpose of correct system operation: when it is too heavy, in fact, delivery of the liquid occurs intermittently/at impulses, which is not desired. The weight density of the ball is hence preferably 1,2-2,6, more preferably 1,4-2,10.

The ball material is preferably chosen among inexpensive but little hygroscopic materials, to prevent said ball from changing its size and weight density upon use. Exemplary materials are glass, Teflon™ or Delrin®.

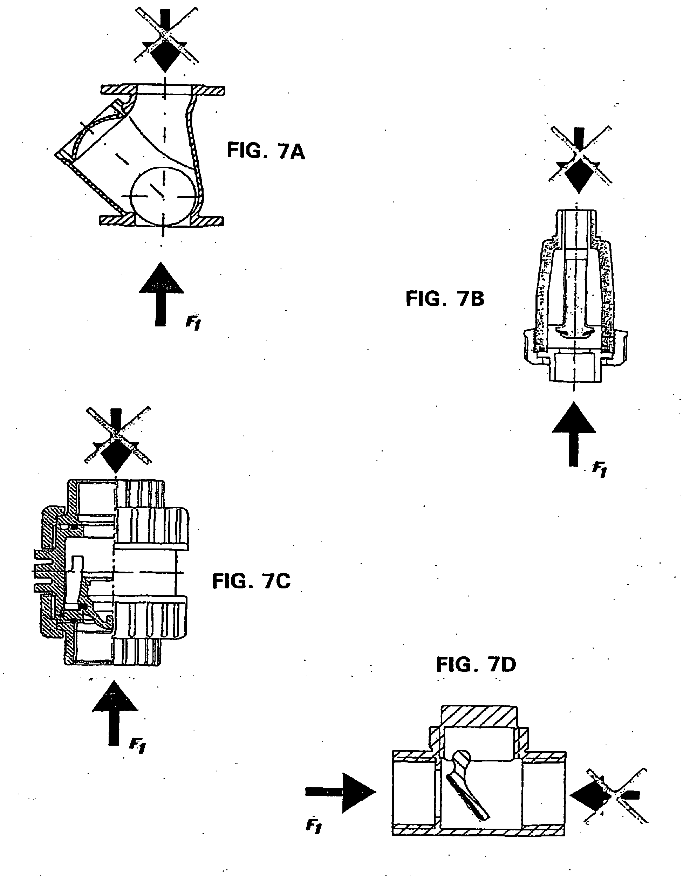

Figs. 7A-7D show other embodiments of check valves which, for some aspects, display a behaviour equivalent to the valve of fig. 6, although each one has its own peculiarities. In any case, each of these valves is suitable for use in the anti-drip device according to the main teaching of the present invention.

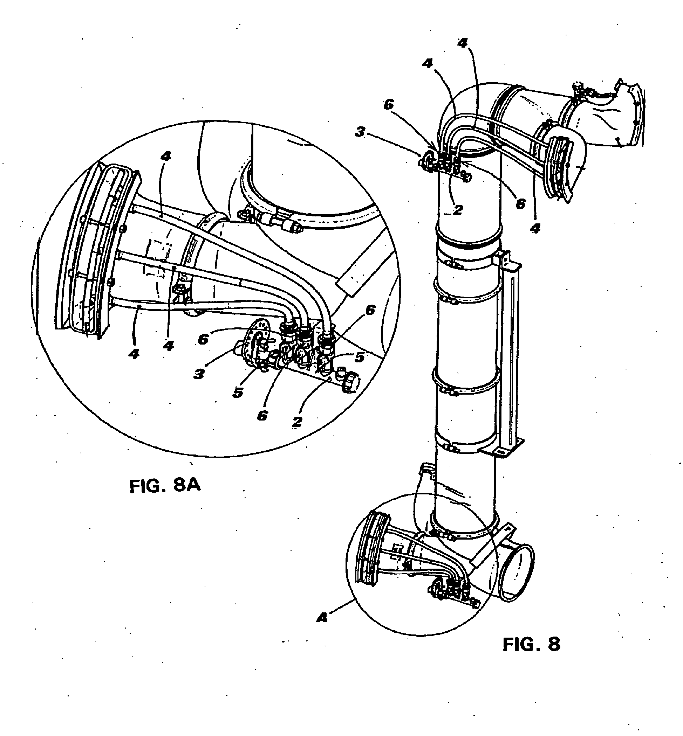

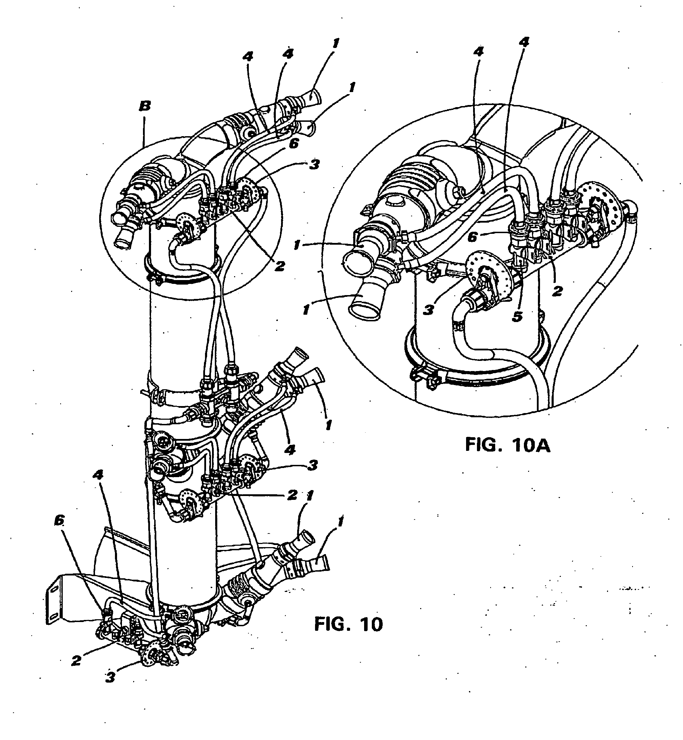

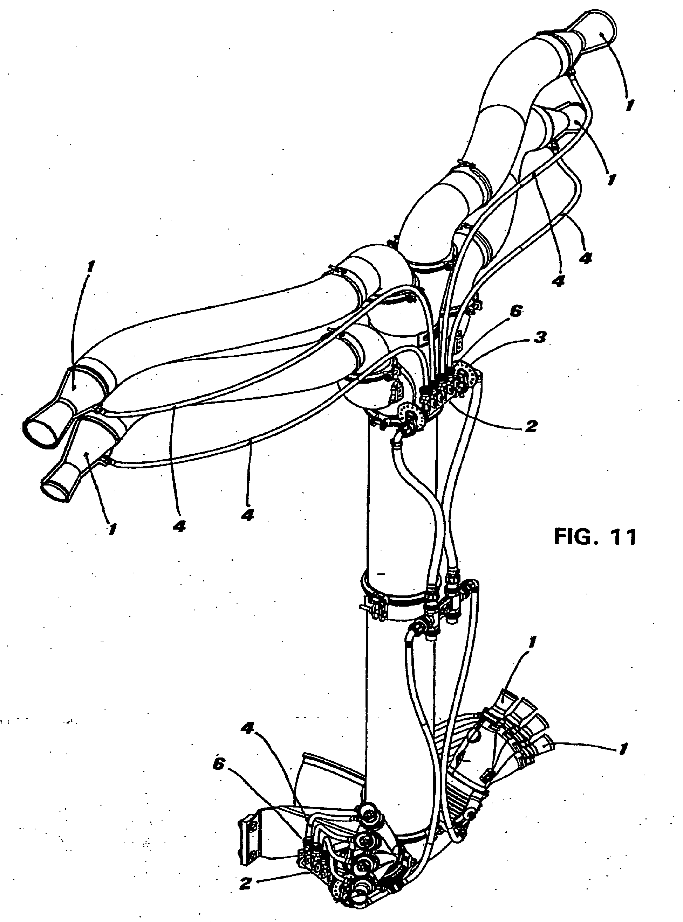

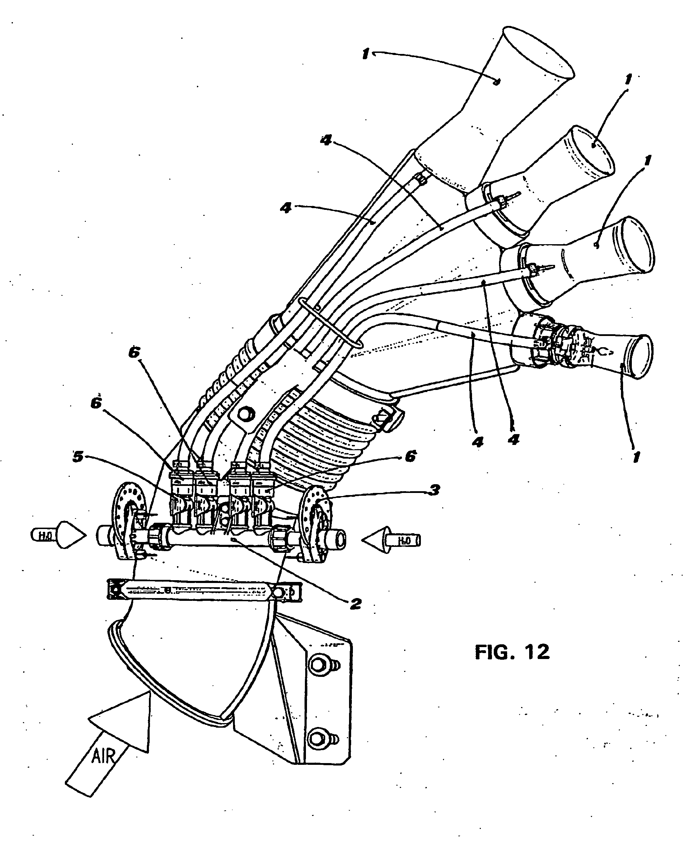

Figs. 8 to 12 show various shapes of delivery devices whereto the above-described system with check valve can be applied and which represent various embodiments of the atomiser of the invention.

In particular, in figs. 8 and 8A, the delivery device has two pairs of spraying fans 8, arranged at the lower and upper end of a vertical column distributing the airflow. Each fan is fed with treatment liquid by means of three small pipes converging to the same manifold equipped with the anti-drip device of the invention.

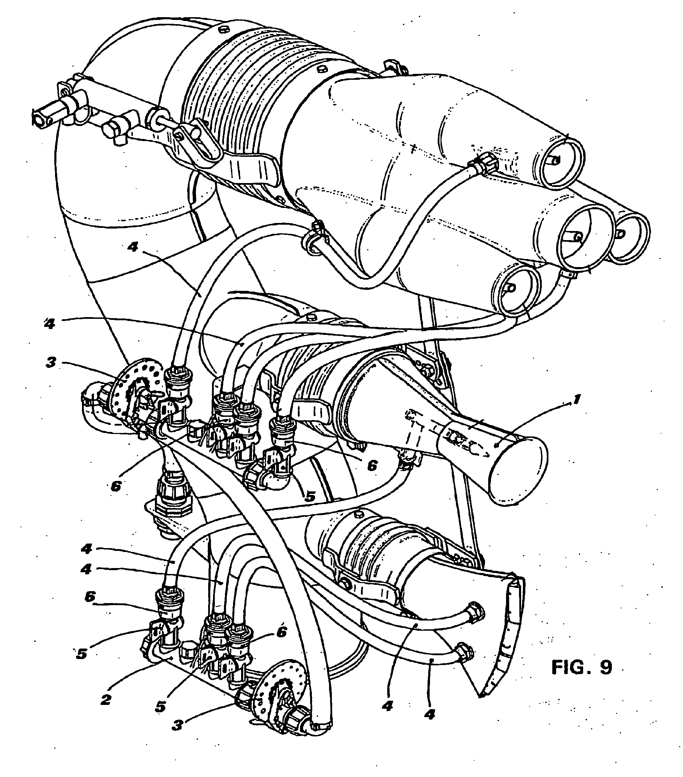

Other arrangements of delivery devices, with diffuser tubes, are illustrated in figs. 9-12 which are perfectly comprehensible to a skilled person in the art.

During operation, with running engine, the flow of the liquid coming from tank S, suitably adjusted by disc gauger 3, arrives in the distribution manifolds 2 and, through a plurality of branches, freely arrives into the small pipes 4, through shutters 5 and check valves 6. Since in the delivery ducts an airflow is pushed at speed by blower V, a depression is determined by Venturi effect, which recalls the treatment liquid from the outlet port (not shown) of small pipes 4 into the delivery tube.

The liquid, by entering the airblast, is finely dispersed and later discharged on the crops to be treated.

During such step, the system operates without any drip phenomenon and allows a smooth and even distribution of the liquid.

Once finished spraying, when the machine is stopped by shutting off the feeding of the liquid and by turning off the blower, the liquid remaining in the small pipes 4 of each delivery assembly tends to flow back downwards by gravity, towards the distribution manifold. However, thanks to the presence of the check valve arranged between small pipe 4 and manifold 2, the liquid is prevented from flowing backwards and from transferring - by gravity and by the principle of communicating vessels - into the small pipes located below: thereby the risk of dripping is completely avoided.

The liquid remains trapped inside each small pipe 4, without being able to flow into the other ones and ready to be newly distributed during a subsequent step of atomiser operation.

As is understandable, with an extremely simple and inexpensive arrangement, the object set forth in the preliminary remarks has been fully achieved.

Advantageously, the check valve according to the invention can be easily applied, not only during manufacturing of delivery headpieces, but also onto headpieces already installed on existing atomisers. The check valve which is not preloaded, can in fact be easily installed, arranging it between the small feeding pipes and their respective manifold or shutter, possibly shortening a little the existing small feeding pipes to avoid the resulting of sharp curves.

Of course, although this specific embodiment of a one-way check valve has been described and illustrated, many other might be the means of automatic stoppage of liquid reflux from small pipes 4, all within the reach of a skilled person in the art, without departing from the scope of the invention.

Moreover, it is evident that the set of delivery devices, comprising one or more series of delivery assemblies, can take on various other shapes according to requirements and specific applications.

On the other hand, it is understood that the invention is not limited to the specific embodiments illustrated above, which merely represent non-limiting examples of the scope of the invention, but that a number of changes are possible, all within the reach of a skilled person in the art, without departing from the scope of the invention.

Although, in the description, reference has always been made to a manifold of the small pipes, this term is used to indicate any one element acting as a communication and linking element between the various small pipes, which may be found also in a hollow body of a different shape.

## Claims

1. Low-volume atomiser for agricultural use, of the type comprising at least a tank (S) for a treatment liquid, a blower (V) to define an airblast in delivery ducts (1) of delivery assemblies, and a system for feeding at very low pressure the liquid to the delivery ducts (1) comprising at least one common manifold element (2) with multiple branches from which a series of small pipes (4) depart connecting to respective delivery ducts, **characterised in that** between said common manifold (2) and each of said small pipes (4), at the bottom of said pipes, there is provided at least one check value (6) which prevents reflux of the treatment liquid towards said common manifold element and **in that** said common manifold element (2) is arranged so that the check valves (6) of the respective small pipes (4) are at a lower level than the outlet port of the lowermost small pipe (4), of each delivery assembly.

2. Atomiser as claimed in any one of the preceding claims, wherein said check valves (6) are ball valves working by simple gravity.

3. Atomiser as claimed in claim 2), wherein said ball has a weight density ranging between 1, 2 and 2,6, preferably from 1,4 to 2,10.

4. Atomiser as claimed in claim 1), wherein said check valves (6) are needle valves.

5. Atomiser as claimed in claim 1), wherein said check valves (6) are shovel valves.

6. Atomiser as claimed in any one of the preceding claims, wherein said delivery ducts comprise a Venturi-effect diffuser in the proximity of which opens the end of the respective small feeding pipe (4).

7. Atomiser as claimed in anyone of claims 1) to 6), wherein said delivery ducts have a fan-shaped device at their end.

8. Headpiece for an agricultural low-volume atomiser, of the type comprising at least one delivery assembly comprising a plurality of diffusion ducts, arranged at different heights, whereto respective small feeding pipes of the treatment liquid at a very low pressure lead, which pipes depart from a common manifold, **characterised in that** it further comprises, between the common manifold and at least the diffusion ducts arranged at greater height, check valves provided across and at the bottom of said small pipes in proximity of said common manifold and capable of preventing reflux of said treatment liquid by gravity.

9. Headpiece as claimed in claim 8), wherein said check valves comprise a sealing seat wherein a freely moving obstruction ball is meant to rest by gravity.

10. Headpiece as claimed in claim 9), wherein said ball has a weight density ranging between 1,2 and 2,6, preferably from 1,4 to 2,10.

11. Anti-drip device for a low-volume atomiser for agricultural use or a headpiece as claimed in any one of the preceding claims, comprising small feeding pipes (4) for the treatment liquid connecting upper diffusers (1) of delivery assemblies with a common feeding manifold (2), **characterized in that,** it further comprises check valves (6) being arranged across said feeding pipes (4) in the proximity of said common manifold (2).

12. Device as claimed in claim 11), wherein said common manifold (2) is arranged according to its main axis with a substantially horizontal attitude.

13. Use of check valves in an atomiser for agricultural use equipped with delivery headpieces having a plurality of diffusers, at different heights, with relative small pipes feeding the treatment liquid at very low pressure and departing, at least partly, from a common manifold, **characterised in that** said valves are not preloaded and are arranged to cross said small pipes in the proximity of said common manifold, so as to prevent only reflux of liquid from the pipes towards said common manifold.

## Patentansprüche

1. Zerstäuber mit kleinem Volumen zur landwirtschaftlichen Verwendung von der Art, die wenigstens einen Tank (S) für eine Behandlungsflüssigkeit, ein Gebläse (V) zum Definieren eines Gebläsewinds in Förderleitungen (1) von Förderanordnungen und ein System zum Zuführen der Flüssigkeit zu den Förderleitungen (1) unter sehr geringem Druck aufweist, umfassend wenigstens ein gemeinsames Verteilerelement (2) mit mehreren Abzweigungen, von denen eine Reihe von kleinen Röhren (4) abzweigen, die mit jeweiligen Förderleitungen verbunden sind, **dadurch** charakterisiert, dass zwischen dem gemeinsamen Verteiler (2) und jeder der kleinen Röhren (4) an der Unterseite der Röhren wenigstens ein Rückschlagventil (6) vorgesehen ist, das einen Rückfluss der Behandlungsflüssigkeit zu dem gemeinsamen Verteilerelement verhindert, und dass das gemeinsame Verteilerelement (2) so angeordnet ist, dass die Rückschlagventile (6) der jeweiligen kleinen Röhren (4) auf einer niedrigeren Ebene liegen als der Auslassanschluss der untersten kleinen Röhre (4) jeder Förderanordnung.

2. Zerstäuber nach einem der vorangehenden Ansprüche, **dadurch gekennzeichnet, dass** die Rückschlagventile (6) Kugelventile sind, die durch einfache Schwerkraft arbeiten.

3. Zerstäuber nach Anspruch 2, **dadurch gekennzeichnet, dass** die Kugel ein spezifisches Gewicht im Bereich zwischen 1,2 und 2,6, vorzugsweise zwischen 1,4 und 2,10 aufweist.

4. Zerstäuber nach Anspruch 1, **dadurch gekennzeichnet, dass** die Rückschlagventile (6) Nadelventile sind.

5. Zerstäuber nach Anspruch 1, **dadurch gekennzeichnet, dass** die Rückschlagventile (6) Shovel-Ventile sind.

6. Zerstäuber nach einem der vorangehenden Ansprüche, **dadurch gekennzeichnet, dass** die Förderleitungen eine Venturi-Effekt-Diffusionseinrichtung aufweisen, in deren Nähe sich das Ende der jeweiligen kleinen Zuführungsröhre (4) öffnet.

7. Zerstäuber nach einem der Ansprüche 1 bis 6, **dadurch gekennzeichnet, dass** die Förderleitungen eine fächerförmige Einrichtung an deren Ende aufweisen.

8. Kopfstück für einen landwirtschaftlichen Zerstäuber mit geringem Volumen, von der Art, die wenigstens eine Förderanordnung umfasst, die eine Vielzahl von Diffusionsleitungen aufweist, die in verschiedenen Höhen angeordnet sind, zu denen jeweilige kleine Zuführungsröhren der Behandlungsflüssigkeit unter einem sehr geringen Druck führen, wobei die Röhren von einem gemeinsamen Verteilerelement abzweigen, **dadurch** charakterisiert, dass es ferner zwischen dem gemeinsamen Verteilerelement und wenigstens den Diffusionsleitungen, die in größerer Höhe angeordnet sind, Rückschlagventile umfasst, die durch kleine Röhren hindurch und an der Unterseite derselben in der Nähe des gemeinsamen Verteilerelements angeordnet sind und fähig sind, Rückfluss der Behandlungsflüssigkeit durch Schwerkraft zu verhindern.

9. Kopfstück nach Anspruch 8, **dadurch gekennzeichnet, dass** die Rückschlagventile einen Dichtungssitz umfassen, in dem eine frei bewegbare Sperrkugel durch Schwerkraft ruhen soll.

10. Kopfstück nach Anspruch 9, **dadurch gekennzeichnet, dass** die Kugel ein spezifisches Gewicht im Bereich zwischen 1,2 und 2.6, vorzugsweise von 1,4 bis 2,10 aufweist.

11. Tropfschutzvorrichtung für Zerstäuber mit geringem Volumen zur landwirtschaftlichen Verwendung oder ein Kopfstück nach einem der vorangehenden Ansprüche, umfassend kleine Zuführungsröhren (4) für die Behandlungsflüssigkeit, die obere Diffusionseinrichtungen (1) von Förderanordnungen mit einem gemeinsamen Zuruhrungsverteilerelement (2) verbinden, **dadurch** charakterisiert, dass sie ferner Rückschlagventile (6) aufweist, die durch Zuführungsröhren (4) in der Nähe des gemeinsamen Verteilerelements (2) angeordnet sind.

12. Vorrichtung nach Anspruch 11, **dadurch gekennzeichnet, dass** das gemeinsame Verteilerelement (2) entlang seiner Hauptachsen mit einer im Wesentlichen horizontalen Ausrichtung angeordnet ist.

13. Verwendung von Rückschlagventilen in einem Zerstäuber zur landwirtschaftlichen Verwendung, ausgestattet mit Zuführungskopfstücken, die eine Vielzahl von Diffusionseinrichtungen in unterschiedlichen Höhen aufweisen, wobei jeweilige kleine Röhren die Behandlungsflüssigkeit unter einem sehr geringen Druck zuführen und wenigstens zum Teil von einem gemeinsamen Verteilerelement abzweigen, **dadurch** charakterisiert, dass die Ventile nicht vorgespannt sind und angeordnet sind, um die kleinen Röhren in der Nähe der gemeinsamen Verteilerelemente zu kreuzen, um lediglich Rückfluss von Flüssigkeit von den Röhren zu dem gemeinsamen Verteilerelement zu verhindern.

## Revendications

1. Atomiseur de faible volume destiné à l'agriculture, du type comprenant au moins un réservoir (S) pour liquide de traitement, un ventilateur soufflant (V) pour définir un jet d'air dans des conduits de décharge (1) d'ensembles de décharge, et un système pour distribuer, à très faible pression, lé liquide dans les conduits de décharge (1) comprenant au moins un élément collecteur commun (2) ayant des embranchements multiples à partir desquels part une série de petits tuyaux (4) se reliant aux conduits de décharge respectifs, **caractérisé en ce que**, entre ledit collecteur commun (2) et chacun desdits petits tuyaux (4), à la base desdits tuyaux, est prévu au moins un clapet de non-retour (6) qui empêche le reflux du liquide de traitement vers ledit élément collecteur commun et **en ce que** ledit élément collecteur commun (2) est agencé de manière que les clapets de non-retour (6) des petits tuyaux (4) respectifs se trouvent à un niveau plus bas que l'orifice de sortie du petit tuyau (4) le plus bas de chaque ensemble de décharge.

2. Atomiseur selon l'une quelconque des revendications précédentes, dans lequel lesdits clapets de non-retour (6) sont des clapets à bille fonctionnant par simple gravité.

3. Atomiseur selon la revendication 2, dans lequel ladite bille a un poids volumique compris entre 1,2 et 2,6, de préférence entre 1,4 et 2,10.

4. Atomiseur selon la revendication 1, dans lequel lesdits clapets de non-retour (6) sont des vannes à pointeau.

5. Atomiseur selon la revendication 1, dans lequel lesdits clapets de non-retour (6) sont des clapets à palette.

6. Atomiseur selon l'une quelconque des revendications précédentes, dans lequel lesdits conduits de décharge comprennent un diffuseur à effet Venturi à proximité duquel s'ouvre l'extrémité du petit tuyau de distribution (4) respectif.

7. Atomiseur selon l'une quelconque des revendications 1 à 6, dans lequel lesdits conduits de décharge ont un dispositif en forme d'éventail à leur extrémité.

8. Pièce de tête pour atomiseur de faible volume destiné à l'agriculture, du type comprenant au moins un ensemble de décharge comprenant une pluralité de conduits de diffusion, agencés à différentes hauteurs, auxquels mènent de petits tuyaux respectifs du liquide de traitement à très faible pression, lesquels tuyaux partent depuis un collecteur commun, **caractérisée en ce que** la pièce de tête comprend, en outre, entre le collecteur commun et au moins les conduits de diffusion agencés à une plus grande hauteur, des clapets de non-retour disposés en travers, et à la base, desdits petits tuyaux à proximité dudit collecteur commun et aptes à empêcher le reflux dudit liquide de traitement par gravité.

9. Pièce de tête selon la revendication 8, dans laquelle lesdits clapets de non-retour comprennent un siège d'étanchéité dans lequel une bille d'obstruction à déplacement libre est destinée à reposer par gravité.

10. Pièce de tête selon la revendication 9, dans laquelle ladite bille a un poids volumique compris entre 1,2 et 2,6, de préférence entre 1,4 et 2,10.

11. Dispositif anti-gouttes pour atomiseur de faible volume destiné à l'agriculture ou pièce de tête selon l'une quelconque des revendications précédentes, comprenant de petits tuyaux de distribution (4) pour le liquide de traitement reliant des diffuseurs supérieurs (1) d'ensembles de décharge ayant un collecteur de distribution commun (2), **caractérisé en ce qu'**il comprend, en outre, des clapets de non-retour (6) étant agencés en travers desdits tuyaux de distribution (4) à proximité dudit collecteur commun (2).

12. Dispositif selon la revendication 11, dans lequel ledit collecteur commun (2) est agencé selon son axe principal avec une attitude sensiblement horizontale.

13. Utilisation de clapets de non-retour dans un atomiseur destiné à l'agriculture équipé de pièces de tête de décharge ayant une pluralité de diffuseurs, à différentes hauteurs, avec de petits tuyaux relatifs distribuant le liquide de traitement à très faible pression et partant, au moins en partie, d'un collecteur commun, **caractérisée en ce que** lesdits clapets ne sont pas préchargés et sont agencés pour traverser lesdits petits tuyaux à proximité dudit collecteur commun, afin d'empêcher uniquement le reflux de liquide depuis les tuyaux vers ledit collecteur commun.
